# EUROPÄISCHE PATENTSCHRIFT

(11) **EP 1 757 907 B1**
(45) Veröffentlichungstag und Bekanntmachung des Hinweises auf die Patenterteilung: **24.06.2009**
(21) Anmeldenummer: 06114515.7
(22) Anmeldetag: 24.05.2006
(51) Int. Cl.: G01L 1/14, F16K 37/00, G01D 5/14, G01D 21/02

(54) **Verfahren und Vorrichtung zum Messen einer Kraft und einer Position**
Method and device for measuring a force and a position
Procédé et dispositif destinés à la mesure d'une force et d'une position

(30) Priorität: 26.08.2005 DE 102005040536
(43) Veröffentlichungstag der Anmeldung: 28.02.2007
(73) Patentinhaber: Honeywell Technologies Sarl, 1110 Morges (CH)
(72) Erfinder: Gratz, Petr, 66434, Kurim (CZ); Hanus, Milos, 52400 Brno (CZ); Pangrac, Pavel, 25166, Senohraby (CZ); Bayer, Dieter, 78052 Villingen-Schwenningen (DE); Ebert, Volker, 70771, Leinfelden (DE)
(74) Vertreter: TBK-Patent

(56) Entgegenhaltungen:
- US-A- 3 731 184
- US-A- 4 543 732
- US-A- 4 627 292
- US-A- 5 046 702
- US-A- 5 161 083

## Beschreibung

Die vorliegende Erfindung betrifft ein Verfahren zum Messen einer Kraft und einer Position bei einer linearen Betätigungsvorrichtung, eine Vorrichtung zur Messung einer Kraft und einer Position bei einer linearen Betätigungsvorrichtung sowie eine lineare Betätigungsvorrichtung, die eine entsprechende Vorrichtung zur Messung einer Kraft und einer Position umfasst.

Lineare Betätigungsvorrichtungen, die auch als Linearantrieb oder Linearaktoren bezeichnet werden, sind in einer Vielzahl von Größen und Leistungswerten verfügbar und finden vielerlei Anwendungen. Ein Beispiel für eine derartige Anwendung ist die Verwendung einer linearen Betätigungsvorrichtung als Antriebselement in einem Heizungsregelungssystem oder Klimatisierungssystem, beispielsweise als Lineantrieb für ein Ventil oder mehreren Ventilen für Thermostate.

Bei der Verwendung von linearen Betätigungsvorrichtungen ist es in vielen Fällen wichtig, bestimmte Betriebsparameter zu kennen, wie beispielsweise die Position eines Verschiebungselements der linearen Betätigungsvorrichtung, beispielsweise einer Gewindespindel oder einer Schubstange, oder die Kraft, mit der die lineare Betätigungsvorrichtung auf das zu betreibende Element (z.B. ein Ventil) wirkt. Insbesondere in komplexeren Regelungssystemen, wie einem elektronisch geregelten Heizungssystem oder Klimatisierungssystem eines Gebäudes oder dergleichen, in denen die lineare Betätigungsvorrichtung als Stellglied oder dergleichen agiert, ist eine entsprechende Erfassung von Betriebsparametern von Bedeutung, um die Einstellungen der Ventile genau anzusteuern oder um nachzuregeln.

Bisher wird bei derart eingesetzten linearen Betätigungsvorrichtung die Erfassung der aufgebrachten Kraft mittels eines Mikroschalters vorgenommen, der bei der linearen Betätigungsvorrichtung bereitgestellt ist. Der Mikroschalter ist so angeordnet, dass er bei Erreichen einer vorbestimmten Position des Verschiebungselements bzw. der Schubstange, die als Referenzposition für ein Anliegen einer Grenzkraft bestimmt worden ist, geschaltet wird. Hierdurch wird der Betrieb der linearen Betätigungsvorrichtung ausgeschaltet.

Diese Anordnung ist jedoch relativ ungenau und anfällig gegenüber Fehlern. So ist beispielsweise eine Kalibrierung nur schwer möglich, da die Position des Mikroschalters üblicherweise bei der Herstellung festgelegt wird. Optional wird eine Kalibrierung durch eine manuelle Verstellung einer entsprechen angebrachten Schraube ausgeführt, was jedoch eine aufwendige Handarbeit erfordert. Zusätzlich ist bei einem derartigen Aufbau auch nicht möglich, Kräfte unabhängig einzustellen. Auch ist das System gegenüber Umwelteinflüssen anfällig, wie beispielsweise einem Temperatureinfluss, der zu einer Ausdehnung oder Kontraktion des Materials führen kann. Somit können systematische Fehler die Erfassung der Grenzkraft beeinflussen. Weiterhin wird der Mikroschalter mechanisch geschaltet, so dass Verschmutzungen oder dergleichen zu Störungen führen können. Dies kann zu Beschädigungen der Ventile oder zu einer nicht ausreichenden Betätigung der Ventile durch die lineare Betätigungsvorrichtung führen.

Eine Aufgabe der vorliegenden Erfindung ist es somit, ein verbessertes Verfahren zur Erfassung von Betriebsparametern, insbesondere einer Kraft und einer Position bei einer linearen Betätigungsvorrichtung bereitzustellen. Weiterhin ist eine Aufgabe der vorliegenden Erfindung, eine entsprechende verbesserte Vorrichtung zur Messung von Betriebsparametern einer linearen Betätigungsvorrichtung sowie eine entsprechend ausgerüstete lineare Betätigungsvorrichtung bereitzustellen.

Diese Aufgaben werden durch die in den unabhängigen Patentansprüchen angegebenen Maßnahmen gelöst. Vorteilhafte Weiterbildungen sind in den jeweiligen abhängigen Patentansprüchen angegeben.

Gemäß einer Ausgestaltung der vorliegenden Erfindung ist ein Verfahren zum Messen einer Kraft und einer Position bei einer linearen Betätigungsvorrichtung bereitgestellt mit Schritten zum Erfassen einer Änderung einer elektrischen Eigenschaft eines ersten Spulensystem zur Messung einer Position der linearen Betätigungsvorrichtung, wobei die Änderung der elektrischen Eigenschaft durch ein Bewegen eines ersten Messkörpers in dem ersten Spulensystem hervorgerufen wird, Erfassen einer Änderung einer elektrischen Eigenschaft eines zweiten Spulensystems zur Messung einer Kraft, die bei der linearen Betätigungsvorrichtung wirkt, wobei die Änderung der elektrischen Eigenschaft durch ein Bewegen eines zweiten Messkörpers in dem zweiten Spulensystem hervorgerufen wird, wobei die Bewegung des ersten Messkörpers durch eine Positionsänderung eines linearen Verschiebungselements der linearen Betätigungsvorrichtung erzeugt wird und die Bewegung des zweiten Messkörpers durch eine Kraft-Weg-Umwandlung über ein Verformungselement erzeugt wird.

Gemäß einer weiteren Ausgestaltung der vorliegenden Erfindung ist Vorrichtung zur Messung einer Kraft und einer Position bei einer linearen Betätigungsvorrichtung bereitgestellt, die umfasst: ein lineares Verschiebungselement, ein erstes Spulensystem mit einem ersten beweglichen Messkörper, ein zweites Spulensystem mit einem zweiten beweglichen Messkörper, ein Verformungselement, das mit dem zweiten Messkörper verbunden ist, und eine Erfassungseinrichtung zur Erfassung einer Änderung in einer elektrischen Eigenschaft des ersten Spulensystems zur Messung einer Position der linearen Betätigungsvorrichtung und in einer elektrischen Eigenschaft des zweiten Spulensystems zur Messung einer Kraft, die bei der linearen Betätigungsvorrichtung wirkt, wobei die Änderung der elektrischen Eigenschaft des ersten Spulensystems durch ein Bewegen des ersten Messkörpers in dem ersten Spulensystem hervorgerufen wird und die Änderung der elektrischen Eigenschaft des zweiten Spulensystems durch ein Bewegen des zweiten Messkörpers in dem zweiten Spulensystem hervorgerufen wird, wobei die Bewegung des ersten Messkörpers durch eine Positionsänderung des linearen Verschiebungselements der linearen Betätigungsvorrichtung erzeugt wird und die Bewegung des zweiten Messkörpers durch eine Kraft-Weg-Umwandlung über das Verformungselement erzeugt wird.

Gemäß noch einer weiteren Ausgestaltung der vorliegenden Erfindung ist Lineare Betätigungsvorrichtung bereitgestellt, die umfasst: ein lineares Verschiebungselement, das eingerichtet ist, eine lineare Bewegung auszuführen, ein Antriebselement, das eingerichtet ist, das lineare Verschiebungselement anzutreiben, und eine Vorrichtung zur Messung einer Kraft und einer Position bei der linearen Betätigungsvorrichtung, wie sie vorstehend definiert ist.

Zusätzliche vorteilhafte Weiterbildungen sind nachstehend angegeben.

Das Bewegen des zweiten Messkörpers kann dadurch erzeugt werden, dass die auf die lineare Betätigungsvorrichtung wirkende Kraft das Verformungselement verformt und der zweite Messkörper, der mit dem Verformungselement verbunden ist, durch die Verformung über einen Weg bewegt wird, der proportional zu der Kraft ist.

Das Verformungselement kann ein elastisches Element sein, insbesondere eine Feder.

Das erste Spulensystem kann einen ersten Spulenkörper und eine um den ersten Spulenkörper gewickelte Spule umfassen und der erste Messkörper, der aus einem Metall hergestellt sein kann, kann als beweglicher Spulenkern in dem ersten Spulensystem fungieren. Ebenso kann das zweite Spulensystem einen zweiten Spulenkörper und eine um den zweiten Spulenkörper gewickelte Spule umfassen, wobei der zweite Messkörper, der aus einem Metall hergestellt sein kann, als beweglicher Spulenkern in dem zweiten Spulensystem fungieren kann. Hierbei können der erste Spulenkörper und der zweite Spulenkörper einstückig ausgebildet sein. Zusätzlich oder alternativ hierzu kann der erste Spulenkörper einen kleineren Durchmesser als der zweite Spulenkörper aufweisen.

Die geänderten elektrischen Eigenschaften der ersten und zweiten Spulensysteme als veränderlicher Parameter können in Verbindung mit einer elektrischen Schaltung verwendet werden, wobei ein Ausgangssignal der elektrischen Schaltung, das durch den veränderlichen Parameter beeinflusst wird, erfasst werden kann und zur Messung der Position und der Kraft bei der linearen Betätigungsvorrichtung ausgewertet werden kann. Die elektrische Schaltung kann dabei zumindest eine elektrische Oszillatorschaltung umfassen, wobei die elektrischen Eigenschaften Induktivitäten der ersten und zweiten Spulensystem sind und das Ausgangssignal ein Frequenzsignal ist. Zusätzlich oder alternativ hierzu können die geänderten elektrischen Eigenschaften der ersten und zweiten Spulensysteme intermittierend verwendet werden, um das Ausgangssignal (PFF) zu beeinflussen, so dass eine Messung der Kraft und eine Messung der Position abwechselnd in vorbestimmten Intervallen ausgeführt werden kann.

Die lineare Betätigungsvorrichtung kann ein Linearantrieb zur Betätigung eines Ventils zur Begrenzung, Regelung und/oder Verteilung von Gasen oder Flüssigkeiten sein (beispielsweise in einem Thermostat).

Das erfindungsgemäße Verfahren sowie die erfindungsgemäße Vorrichtung zur Messung einer Kraft und einer Position und die erfindungsgemäße lineare Betätigungsvorrichtung weisen die nachstehend genannten Vorteile auf.

Durch die Verwendung einer kontaktfreien, beispielsweise induktiven Messung der Betriebsparameter der linearen Betätigungsvorrichtung ist es möglich, die lineare Betätigungsvorrichtung bei einem Einbau in ein System, wie ein Heizungs- oder Klimatisierungsregelsystem, entsprechend den gewünschten Vorgaben (Grenzkraft für Betätigung usw.) zu kalibrieren und gegebenenfalls auch nachzujustieren. Hierdurch können auch unterschiedliche Umgebungseinflüsse wie die Temperatur besser kompensiert werden. Mithin wird vermieden, dass die lineare Betätigungsvorrichtung bzw. die Messung von Betriebsparametern, wie Schubstangenposition oder anliegende Kraft, systematischen Fehlern unterliegt. Ferner wird durch die kontaktlose Messung die Empfindlichkeit der Messung gegenüber einer Verschmutzung verringert. Außerdem ist es durch die Verwendung einer induktiven Erfassung zur Messung der Kraft möglich, auch Zwischenwerte zu erfassen, so dass nicht nur das Erreichen einer Grenzkraft detektierbar ist. Des weiteren ist das System preiswert herstellbar, da beispielsweise keine teuren Materialien oder Bauteile für die Elemente der Vorrichtung zur Erfassung der Kraft und der Position erforderlich sind.

Die Erfindung ist nachstehend anhand eines bevorzugten Ausführungsbeispiels unter Bezugnahme auf die beigefügte Zeichnung näher beschrieben. Es zeigen:
Fig. 1 eine schematische Teilschnittdarstellung einer linearen Betätigungsvorrichtung gemäß einem Ausführungsbeispiel der Erfindung,
Fig. 2 eine vergrößerte Darstellung eines Teils der in Fig. 1 gezeigten linearen Betätigungsvorrichtung und
Fig. 3 ein elektrisches Schaltbild einer Erfassungseinrichtung, die zur Messung der Kraft und der Position gemäß dem Ausführungsbeispiel verwendet wird.

Zunächst wird das Grundprinzip der vorliegenden Erfindung kurz beschrieben.

Elektrische Eigenschaften eines Spulensystems, das beispielsweise aus einem Spulenkörper und einer darauf aufgewickelten Spule besteht, verändern sich, wenn ein metallischer Gegenstand, d.h. ein Messkörper, in der Spule bewegt wird. Zu den elektrischen Eigenschaften zählen die Induktivität des Spulensystems und die Spulengüte. Wenn der metallische Gegenstand in dem Spulensystem, der auch als Spulenkern bezeichnet werden kann, kontinuierlich bewegt wird, ändern sich die elektrischen Eigenschaften der Spule entsprechend. Unter Verwendung dieses Prinzips ist es möglich, die aktuelle Position eines Verschiebungselements einer linearen Betätigungsvorrichtung, d.h. einer Gewindespindel oder einer Schubstange eines Linearantriebs oder Linearaktors zu erfassen, indem das Verschiebungselement als Spulenkern verwendet wird. Eine Bewegung der Gewindespindel oder der Schubstange in dem Spulensystem hat eine Änderung der Induktivität oder der Spulengüte zur Folge, wobei diese Änderung wiederum erfasst werden kann und so Rückschlüsse auf die ausgeführte Bewegung bzw. Positionsänderung möglich sind. Anders ausgedrückt entsteht ein jeweiliges Messsignal durch eine jeweilige Position des Messkörpers.

Eine auf die lineare Betätigungsvorrichtung wirkende Kraft (bzw. eine Kraft, die durch die lineare Betätigungsvorrichtung ausgeübt wird) kann auf der Grundlage des vorstehend beschriebenen Prinzips ebenso erfasst werden, indem eine Kraft-Weg-Umformung vorgenommen wird. Das heißt, wenn die auf die Schubstange wirkende Kraft in geeigneter Weise in eine Bewegung eines bewegbaren Elements umgesetzt wird, kann diese Bewegung als Positionsänderung eines metallischen Messkörpers in einem Spulensystem gemessen werden, indem die entsprechende Änderung der elektrischen Eigenschaften (Induktivität, Spulengüte) erfasst wird. Die Kraft-Weg-Umformung kann beispielsweise mittels eines elastischen Verformungselements wie einer Feder ausgeführt werden, die sich bei Anlegen einer Kraft verformt und so die Positionsänderung hervorruft.

Anders ausgedrückt, durch eine statische Positionsmessung eines Messkörpers in einem Spulensystem auf der Grundlage einer kontaktlosen induktiven Erfassung kann bei geeigneter Anordnung der Bauteile in einer linearen Betätigungsvorrichtung sowohl die Position des linearen Verschiebungselements der linearen Betätigungsvorrichtung als auch eine darauf wirkende Kraft gemessen werden, wobei zur Erfassung der beiden Betriebsgrößen Kraft und Position vorteilhafterweise zwei getrennte Spulensysteme verwendet werden.

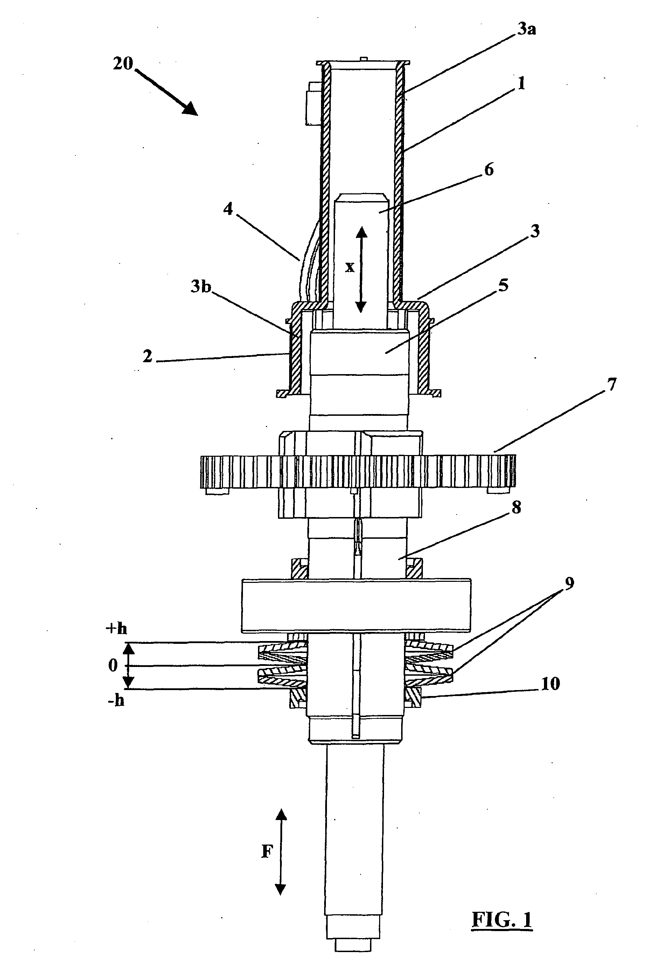

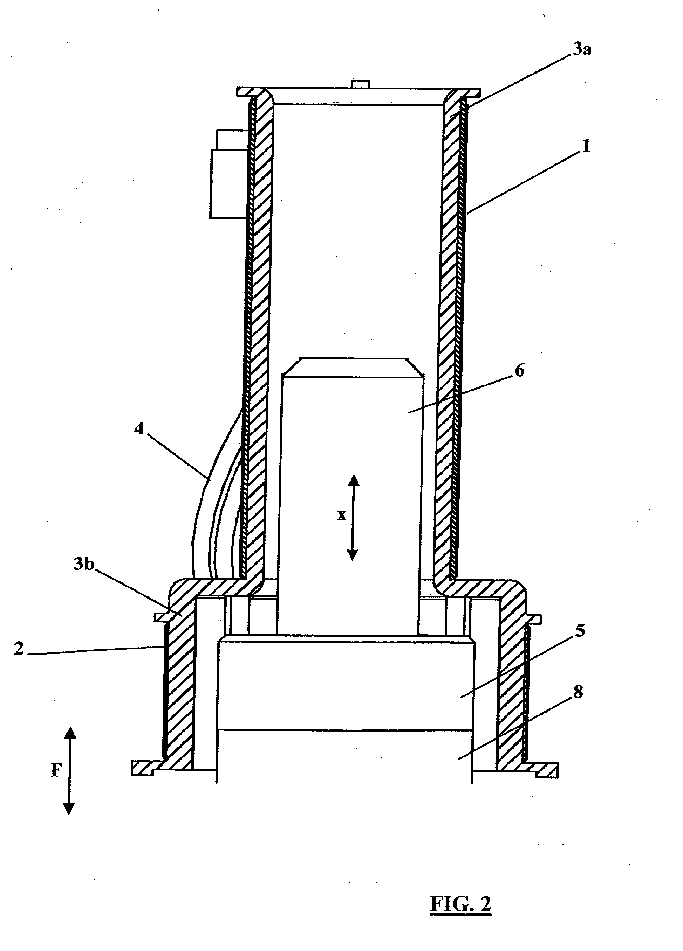

Unter Bezugnahme auf die Figuren 1 und 2 ist nachstehend ein Beispiel einer linearen Betätigungsvorrichtung beschrieben, bei der die vorliegende Erfindung zur Messung der Kraft und der Position angewendet wird. Es ist anzumerken, dass die vorliegende Erfindung nicht nur bei einer linearen Betätigungsvorrichtung angewendet werden kann, die in ihrem Aufbau der gezeigten linearen Betätigungsvorrichtung entspricht. Andere Arten von linearen Betätigungsvorrichtung sind ebenso geeignet, die vorliegende Erfindung zu verwenden, solange eine geeignete Kraft-Weg-Umformung ausgeführt werden kann.

In Fig. 1 ist eine schematische Teilschnittdarstellung der linearen Betätigungsvorrichtung gezeigt, während in Fig. 2 eine vergrößerte Darstellung eines Abschnitts der linearen Betätigungsvorrichtung gemäß Fig. 1 gezeigt ist, in dem insbesondere die für die Vorrichtung zur Messung der Kraft und der Position erforderlichen Bauelemente veranschaulicht sind.

Bezugszeichen 20 bezeichnet die lineare Betätigungsvorrichtung, die beispielsweise ein Linearantrieb zur Betätigung eines Ventils zur Begrenzung, Regelung und/oder Verteilung von Gasen oder Flüssigkeiten ist (beispielsweise in einem Thermostat). Die lineare Betätigungsvorrichtung 20 umfasst ein lineares Verschiebungselement in Form einer Gewindespindel, eine Spindelmutter 8, die die Gewindespindel 6 zumindest teilweise umschließt, sowie ein Antriebselement 7, wie beispielsweise ein Zahnrad, das an eine (nicht gezeigten) Motor angeschlossen ist und von diesem angetrieben drehend wird. Das Zahnrad 7 ist mit der Spindelmutter 8 verbunden, so dass bei einer Drehung des Zahnrads 7, angetrieben durch den Motor, die Spindelmutter 8 gedreht wird und so das Verschiebungselement 6 entsprechend linear bewegt wird (siehe Pfeil x). An der Unterseite der Gewindespindel 6 in Fig. 1 kann ein beliebiges zu betätigendes Element oder eine mechanische Anordnung angelegt sein, wie beispielsweise ein Ventil, das durch die Bewegung der Gewindespindel 6 betätigt wird. In dem beschriebenen Ausführungsbeispiel ist die Gewindespindel 6 aus einem Metall, beispielsweise aus Messing, ausgebildet.

Bezugszeichen 3 bezeichnet einen kelchartigen Aufsatz, der an einer Endseite der linearen Betätigungsvorrichtung 20 die Gewindespindel 6 und die Spindelmutter 8 umschließt. Der Aufsatz 3 ist beispielsweise aus Kunststoff geformt und kann an der Oberseite beispielsweise durch einen Metalldeckel (aufgrund der Magnetfeldlinien) verschlossen sein, wobei er aber ebenso offen gelassen werden kann.

Bezugszeichen 1 bezeichnet eine Spulenwicklung bzw. Spule eines ersten elektrischen Spulensystems. Die Spule 1 ist um einen ersten Spulenkörper 3a gewickelt, der beispielsweise ein Teil des Aufsatzes 3 ist. Die Spulenwicklung 1 kann in mehreren Lagen aufgewickelt sein und aus einem Kupferdraht gebildet werden. Die Länge der Spule 1 ist dabei vorteilhafterweise zumindest so lang wie ein möglicher Verschiebungsweg (x) des Verschiebungselements 6 in dem Aufsatz 3 und umschließt diesen Verschiebungsweg. Wie es nachstehend beschrieben ist, dient die Spule 1 zur Erfassung der Position des Verschiebungselements 6.

Wie es vorstehend beschrieben ist, wird mittels der Spindelmutter 8 die Gewindespindel 6 als Verschiebungselement der linearen Betätigungsvorrichtung 20 linear bewegt. Mit der Spindelmutter 8 verbunden ist ein zweiter Messkörper 5, der aus einem Metall, wie beispielsweise einem Kupferrohr oder dergleichen, gebildet ist und an dem oberen Ende der Spindelmutter 8 in Fig. 1 angebracht ist. Der Aufsatz 3 ist so ausgebildet, dass er den Messkörper 5 am oberen Ende der Spindelmutter 8 umschließt.

Bezugszeichen 2 bezeichnet eine zweite Spulenwicklung bzw. Spule eines zweiten Spulensystems. Das zweite Spulensystem umfasst ferner einen zweiten Spulenkörper 3b, der beispielsweise Teil des Aufsatzes 3 ist. Anders ausgedrückt ist der erste Spulenkörper 3a und der zweite Spulenkörper 3b einstückig ausgebildet. Hierbei weist in dem vorliegenden Ausführungsbeispiel der zweite Spulenkörper 3b einen größeren Durchmesser als der erste Spulenkörper 3a auf. Hierdurch ist der Abstand zwischen der Innenseite der jeweiligen Spulenkörper 3a und 3b und der Außenseite der jeweiligen Messkörper 6 und 5 klein und näherungsweise gleich. Es ist jedoch anzumerken, dass die Durchmesser der ersten und zweiten Spulenkörper 3a, 3b auch gleich sein kann, was beispielsweise der Fall wäre, wenn die Grundform des Aufsatzes 3 zylinderförmig wäre. Die zweite Spule 2 kann ähnlich zu der ersten Spule 1 aus Kupferdraht geformt sein und in mehreren Lagen aufgewickelt sein. Die Höhe der Spulenwicklung 2 ist dabei im Wesentlichen gleich einer Strecke, die der zweite Messkörper 5 durchwandert.

Bezugszeichen 9 bezeichnet ein elastisches Verformungselement, das vorzugsweise eine oder mehrere Federn wie Tellerfedern umfasst. Das Verformungselement 9 ist mit der Spindelmutter 8 verbunden und stößt an der Unterseite in Fig. 1 an festes Element 10 an, das beispielsweise ein Druckkugellager ist. Das Verformungselement ist ausgelegt, sich um eine neutrale Lage nach oben oder unten um einen Weg h zu verformen. In einem Beispiel, bei dem eine Grenzkraft für das lineare Betätigungselement, beispielsweise eine Schließkraft für ein anzusteuerndes Ventil, 600 N beträgt, ist der Weg h beispielsweise +/- 2 mm.

Bezugszeichen 4 bezeichnet elektrische Leitungen, die die ersten und zweiten Spulen 1, 2 mit einer nachstehend beschriebenen Erfassungseinrichtung verbinden.

Wird das Verschiebungselement 6 durch die Drehung der Spindelmutter 8 linear nach oben oder unten bewegt, ändert sich die Eindringtiefe des Verschiebungselements 6, das als erster Messkörper dient, in dem ersten Spulensystem, d.h. in der ersten Spule 1. Hierdurch wird, wie es vorstehend beschrieben ist, die elektrische Eigenschaft (Induktivität, Spulengüte) der ersten Spule 1 verändert. Diese Änderung wird über die Leitung 4 zu der Erfassungseinrichtung weitergegeben, so dass die Position des Verschiebungselements 6 erfasst werden kann.

Wird nun eine Kraft F durch die lineare Betätigungsvorrichtung 20 ausgeübt, beispielsweise weil die Gewindespindel 6 das (nicht gezeigte) Ventil gegen einen Widerstand bewegt, wird das Verformungselement 10 proportional zu der Kraft F verformt. Das Verformungselement 9, das ein elastisches Element, vorzugsweise eine Feder wie beispielsweise eine Tellerfeder ist, wird um einen entsprechenden Verformungsweg h entsprechend der Kraft F verformt wird. Das Verformungselement ist dabei mit der Spindelmutter 8 verbunden und stößt an das feste Element 10 an, das die Kraft aufnimmt. Anders ausgedrückt führt das Verformungselement eine Kraft-Weg-Umformung aus, wobei eine Kraft F in einen Weg h umgewandelt wird. Hierdurch wird die Spindelmutter 8 entsprechend um den Weg h in der Position versetzt. Der zweite Messkörper 5, der an dem oberen Ende der Spindelmutter 8 angebracht ist, wird folglich entsprechend in der zweiten Spule 2 bewegt, so dass sich eine Änderung der elektrischen Eigenschaften der zweiten Spule 2 ergibt. Diese Änderung wird über die Leitungen 4 an die nachstehend beschriebene Erfassungseinrichtung weitergegeben.

In Fig. 2 sind, wie es vorstehend genannt ist, die beiden Spulensysteme 1, 3a und 6 sowie 2, 3b und 5 bei dem Aufsatz 3 und die beiden metallischen Messkörper 6 und 5 (d.h. die oberen Enden der Gewindespindel 6 und der Spindelmutter 8) zum besseren Verständnis vergrößert dargestellt.

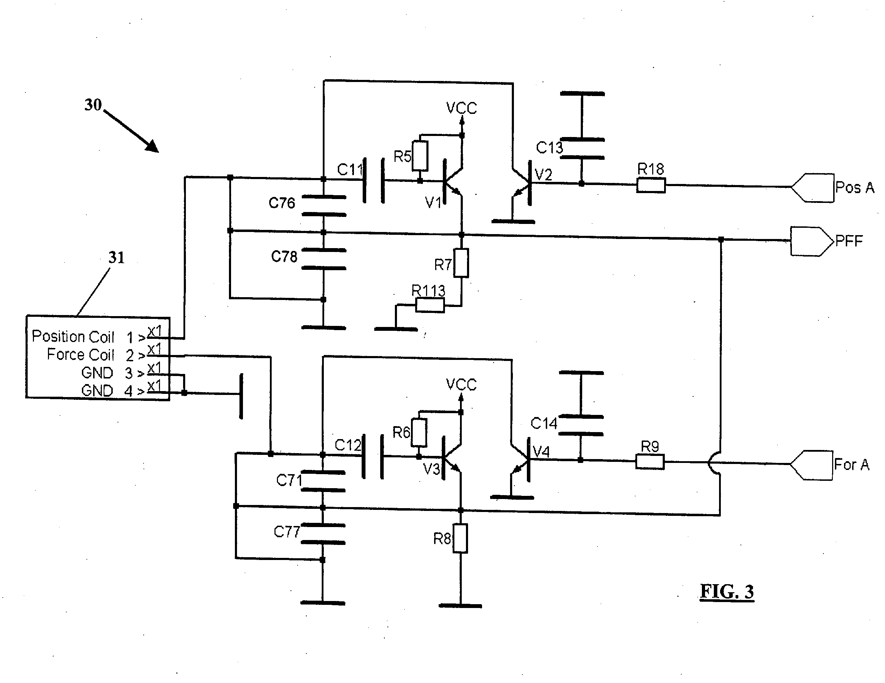

In Fig. 3 ist ein elektrisches Schaltbild eines Teils einer Erfassungseinrichtung 30 gezeigt, die zur Auswertung der Änderungen der elektrischen Eigenschaften der ersten und zweiten Spulen 1, 2 und somit zur Erfassung einer Kraft und einer Position bei der linearen Betätigungsvorrichtung verwendet wird. Hierbei wird in dem vorliegenden Ausführungsbeispiel als Parameter der ersten und zweiten Spulen 1, 2 die Induktivität der Spulen verwendet, wobei die Erfindung aber nicht hierauf begrenzt ist. Auch kann an Stelle der in Fig. 3 gezeigten elektrischen Schaltung eine andere Schaltung verwendet werden, oder eine entsprechende Schaltung kann in einem Computer oder dergleichen simuliert werden. Derartige Alternativen sind für einen Fachmann ersichtlich und werden hier nicht näher beschrieben.

In Fig. 3 bezeichnet Bezugszeichen 31 eine Verbindungseinrichtung zu den ersten und zweiten Spulen 1, 2 in Fig. 1, wobei die Verbindungseinrichtung 31 beispielsweise ein Stecker oder dergleichen ist, der mit den Leitungen 4 in Fig. 1 verbindbar ist. Dabei wird die Verbindung mit der ersten Spule 1 über den Anschluss "Position Coil 1" gebildet und die Verbindung mit der zweiten Spule 2 über den Anschluss "Force Coil 2" gebildet. Die Anschlüsse GND 3 und GND 4 sind Masseanschlüsse.

Gemäß dem vorliegenden Ausführungsbeispiel umfasst die Erfassungseinrichtung 30 des Weiteren zwei Oszillatoren, die jeweils für die Erfassung der Kraft bzw. der Position verwendet werden. Als Beispiel für die Oszillatoren können Colpitt-Oszillatoren verwendet werden. Hierbei ist das erste Spulensystem zur Messung der Position über den Anschluss "Position Coil 1" mit einem der Oszillatoren verbunden und das zweite Spulensystem zur Messung der Kraft über den Anschluss "Position Coil 2" mit dem anderen Oszillator verbunden. Anders ausgedrückt fungieren die erste und die zweite Spule 1, 2 jeweils als Induktivität der beiden Oszillatoren, wobei die Induktivität der Spulen 1, 2 durch die Messkörper 5, 6 verändert wird, wie es vorstehend beschrieben ist.

Der erste der beiden Colpitt-Oszillatoren umfasst Kondensatoren C76, C78, C11, C13, Widerstände R5, R7, R113, R18 und Transistoren V1, V2. Die Verschaltung der Bauelemente ist in dem oberen Abschnitt in Fig. 3 gezeigt. Über einen Eingang "Pos A" wird ein Triggersignal zugeführt, das dazu dient, den ersten Oszillator, der mit der für die Positionsmessung der linearen Betätigungsvorrichtung 20 zuständigen Spule 1 verbunden ist, auf einen Ausgang PFF zu legen, so dass ein Ausgangssignal, das der Position entspricht, ausgegeben wird. Ferner ist eine Versorgungsspannung VCC angelegt.

Der zweite der beiden Colpitt-Oszillatoren umfasst Kondensatoren C71, C77, C12, C14, Widerstände R6, R8, R9, und Transistoren V3, V4. Die Verschaltung der Bauelemente ist in dem unteren Abschnitt in Fig. 3 gezeigt. Über einen Eingang "FOR A" wird ein Triggersignal zugeführt, das dazu dient, den zweiten Oszillator, der mit der für die Kraftmessung der linearen Betätigungsvorrichtung 20 zuständigen Spule 2 verbunden ist, auf den Ausgang PFF zu legen, so dass ein Ausgangssignal, das der Kraft entspricht, ausgegeben wird. Ferner ist eine Versorgungsspannung VCC angelegt.

Alternativ zu dem vorstehend beschriebenen Aufbau ist auch die Verwendung von zwei getrennten Ausgängen für den oberen und den unteren Oszillator, d.h. für die Kraftmessung und die Positionsmessung möglich.

Der Ausgang PFF ist mit einer nicht gezeigten Verarbeitungseinrichtung verbunden, die beispielsweise durch einen Mikroprozessor gebildet wird. Als Beispiel für einen derartigen Mikroprozessor kann ein 8-Bit-Mikroprozessor verwendet werden. Die Verarbeitungseinrichtung wertet das Ausgangssignal der Erfassungseinrichtung 30 aus und kann entsprechende Ergebnisse einem Benutzer angeben. Die Ergebnisse können ebenso in einer weiteren Regelungsverarbeitung oder dergleichen verwendet werden. Ferner kann die Verarbeitungseinrichtung verwendet werden, die an die Eingänge "Pos A" und For A" anliegenden Triggersignale auszugeben, um jeweils einen der beiden Oszillatoren anzusteuern.

Die grundsätzliche Arbeitsweise sowie der allgemeine Aufbau eines Oszillators sind einem Fachmann bekannt und werden hier nicht näher beschrieben. Zur Messung der Kraft und der Position bei der linearen Betätigungsvorrichtung gemäß dem vorliegenden Ausführungsbeispiel wird durch den oberen Oszillator eine Umwandlung der Änderung der Induktivität der Spule 1, die durch die Bewegung der Gewindespindel 6 erzeugt wird, in eine Änderung einer Frequenz eines Rechteckwellenausgangssignals bei dem Ausgang PFF ausgeführt und durch den unteren Oszillator eine Umwandlung der Änderung der Induktivität der Spule 2, die durch die Bewegung des Messkörpers 5 (hervorgerufen durch die Kraft-Weg-Umwandlung durch den Verformungskörper 9) erzeugt wird, in eine Änderung einer Frequenz eines Rechteckwellenausgangssignals bei dem Ausgang PFF ausgeführt. Anders ausgedrückt ist die Induktivität der Spulen 1, 2 jeweils ein veränderlicher Parameter in den Oszillatorschaltungen, so dass die Änderung der Induktivitäten der Spulen 1, 2 den jeweiligen Oszillator einstellt.

Bevorzugte Werte für die Frequenzbereiche der Oszillatoren liegen beispielsweise für den Oszillator zur Positionsmessung im Bereich von 50 kHz und für den Oszillator zur Kraftmessung im Bereich von 70 kHz. Durch die Auslegung der Oszillatoren für derartige Frequenzbereiche ist es möglich, für den ersten Messkörper, d.h. die Gewindespindel 6 ein Material wie Messing zu verwenden, und für den zweiten Messkörper, d.h. das obere Ende der Spindelmutter 8 ein Material wie Kupfer zu verwenden. Diese Materialwahl vereinfacht die Verarbeitung und ist kostengünstiger als wenn die Verwendung von Stahl oder dergleichen erforderlich wäre.

Die Auswertung des Ausgangssignals PFF wird wie nachstehend beschrieben ausgeführt. Vorzugsweise wird für die Messung jeweils nur eine der Spulen 1, 2 ausgewertet, um eine gegenseitige Beeinflussung der erhaltenen Induktivitätswerte der jeweiligen Spulen zu vermeiden. Hierzu werden die Messungen der Kraft und der Position abwechselnd ausgeführt. Zu diesem Zweck werden die Triggersignale Pos A und For A intermittierend zugeführt, beispielsweise mit Intervallen von 100 ms, so dass in entsprechenden Intervallen abwechselnd ein Frequenzsignal, das der Kraft entspricht, und ein Frequenzsignal, das der Position entspricht, am Ausgang PFF anliegt. Da die Oszillatoren sehr schnell stabil arbeiten können, etwa nach 5 ms, ist eine zuverlässige Messung möglich.

Das jeweils anliegende Frequenzsignal wird dann über den Ausgang PFF an den nicht gezeigten Mikroprozessor zur weiteren Verarbeitung, beispielsweise in einer Regelung oder dergleichen, sowie zur Anzeige weitergegeben.

Die Verarbeitungseinrichtung kann so ausgelegt sein, dass sie bei Erreichen einer vorbestimmten Grenzkraft, beispielsweise 600 N, eine Ausschaltung der linearen Betätigungsvorrichtung 20 veranlasst. Ferner ist die Erfassung von unterschiedlichen Kraftwerten möglich.

Durch die vorstehend beschriebene kontaktlose Messung einer Kraft und einer Position bei einer linearen Betätigungsvorrichtung unter Verwendung einer Änderung einer elektrischen Eigenschaft von Spulen ist es möglich, auf einfache, zuverlässige und kostengünstige Weise die Position eines Verschiebungselements der linearen Betätigungsvorrichtung als auch die hierdurch angelegte Kraft zu erfassen und die erhaltenen Ergebnisse entsprechend weiter zu verarbeiten.

## Patentansprüche

1. Verfahren zum Messen einer Kraft und einer Position bei einer linearen Betätigungsvorrichtung (20), mit Schritten zum
Erfassen einer Änderung einer elektrischen Eigenschaft eines ersten Spulensystem (1, 3a, 6) zur Messung einer Position der linearen Betätigungsvorrichtung (20), wobei die Änderung der elektrischen Eigenschaft durch ein Bewegen eines ersten Messkörpers (6) in dem ersten Spulensystem (1, 3a, 6) hervorgerufen wird,
Erfassen einer Änderung einer elektrischen Eigenschaft eines zweiten Spulensystems (2, 3b, 5) zur Messung einer Kraft, die bei der linearen Betätigungsvorrichtung (20) wirkt, wobei die Änderung der elektrischen Eigenschaft durch ein Bewegen eines zweiten Messkörpers (5) in dem zweiten Spulensystem (2, 3b, 5) hervorgerufen wird,
wobei die Bewegung des ersten Messkörpers (6) durch eine Positionsänderung eines linearen Verschiebungselements der linearen Betätigungsvorrichtung (20) erzeugt wird und die Bewegung des zweiten Messkörpers (5) durch eine Kraft-Weg-Umwandlung über ein Verformungselement (9) erzeugt wird.

2. Verfahren nach Anspruch 1, wobei das Bewegen des zweiten Messkörpers (5) dadurch erzeugt wird, dass die auf die lineare Betätigungsvorrichtung (20) wirkende Kraft das Verformungselement (9) verformt und der zweite Messkörper (5), der mit dem Verformungselement (9) verbunden ist, durch die Verformung über einen Weg (h) bewegt wird, der proportional zu der Kraft ist.

3. Verfahren nach einem der Ansprüche 1 und 2, wobei das Verformungselement (9) ein elastisches Element ist, insbesondere eine Feder.

4. Verfahren nach einem der vorangegangenen Ansprüche, wobei
das erste Spulensystem (1, 3a, 6) einen ersten Spulenkörper (3a) und eine um den ersten Spulenkörper (3a) gewickelte Spule (1) umfasst und der erste Messkörper (6), der aus einem Metall hergestellt ist, als beweglicher Spulenkern in dem ersten Spulensystem (1, 3a, 6) fungiert, und
das zweite Spulensystem (2, 3b, 5) einen zweiten Spulenkörper (3b) und eine um den zweiten Spulenkörper (3b) gewickelte Spule (2) umfasst und der zweite Messkörper (5), der aus einem Metall hergestellt ist, als beweglicher Spulenkern in dem zweiten Spulensystem (2, 3b, 5) fungiert.

5. Verfahren nach Anspruch 4, wobei
der erste Spulenkörper (3a) und der zweite Spulenkörper (3b) einstückig ausgebildet sind.

6. Verfahren nach einem der Ansprüche 4 oder 5, wobei der erste Spulenkörper (3a) einen kleineren Durchmesser als der zweite Spulenkörper (3b) aufweist.

7. Verfahren nach einem der Ansprüche 4 oder 5, wobei der Durchmesser des ersten Spulenkörpers (3a) gleich dem Durchmesser des zweiten Spulenkörpers (3b) ist.

8. Verfahren nach einem der vorangegangenen Ansprüche, mit Schritten zum
Verwenden der geänderten elektrischen Eigenschaften der ersten und zweiten Spulensysteme als veränderlicher Parameter in einer elektrischen Schaltung (30),
Erfassen eines Ausgangssignals (PFF) der elektrischen Schaltung, das durch den veränderlichen Parameter beeinflusst wird, und
Auswerten des Ausgangssignals (PFF) zur Messung der Position und der Kraft bei der linearen Betätigungsvorrichtung (20).

9. Verfahren nach Anspruch 8, wobei die elektrische Schaltung (30) zumindest eine elektrische Oszillatorschaltung umfasst, wobei die elektrischen Eigenschaften Induktivitäten der ersten und zweiten Spulensystem sind und das Ausgangssignal (PFF) ein Frequenzsignal ist.

10. Verfahren nach einem der Ansprüche 8 und 9, wobei die geänderten elektrischen Eigenschaften der ersten und zweiten Spulensysteme intermittierend verwendet werden, um das Ausgangssignal (PFF) zu beeinflussen, so dass eine Messung der Kraft und eine Messung der Position abwechselnd in vorbestimmten Intervallen ausgeführt werden.

11. Verfahren nach einem der vorangegangenen Ansprüche,
wobei die lineare Betätigungsvorrichtung (20) ein Linearantrieb zur Betätigung eines Ventils zur Begrenzung, Regelung und/oder Verteilung von Gasen oder Flüssigkeiten ist.

12. Vorrichtung zur Messung einer Kraft und einer Position bei einer linearen Betätigungsvorrichtung (20), umfassend:
ein lineares Verschiebungselement (6),
ein erstes Spulensystem (1, 3a, 6) mit einem ersten beweglichen Messkörper (6),
ein zweites Spulensystem (2, 3b, 5) mit einem zweiten beweglichen Messkörper (5),
ein Verformungselement (9), das mit dem zweiten Messkörper (5) verbunden ist, und
eine Erfassungseinrichtung (30) zur Erfassung einer Änderung in einer elektrischen Eigenschaft des ersten Spulensystems (1, 3a, 6) zur Messung einer Position der linearen Betätigungsvorrichtung und in einer elektrischen Eigenschaft des zweiten Spulensystems (2, 3b, 5) zur Messung einer Kraft, die bei der linearen Betätigungsvorrichtung (20) wirkt,
wobei die Änderung der elektrischen Eigenschaft des ersten Spulensystems (1, 3a, 6) durch ein Bewegen des ersten Messkörpers (6) in dem ersten Spulensystem hervorgerufen wird und die Änderung der elektrischen Eigenschaft des zweiten Spulensystems (2, 3b, 5) durch ein Bewegen des zweiten Messkörpers (5) in dem zweiten Spulensystem hervorgerufen wird,
wobei die Bewegung des ersten Messkörpers (6) durch eine Positionsänderung des linearen Verschiebungselements (6) der linearen Betätigungsvorrichtung (20) erzeugt wird und die Bewegung des zweiten Messkörpers (5) durch eine Kraft-Weg-Umwandlung über das Verformungselement (9) erzeugt wird.

13. Vorrichtung nach Anspruch 12, wobei das Verformungselement (9) eingerichtet ist, durch die auf die lineare Betätigungsvorrichtung (20) wirkende Kraft verformt zu werden, wobei durch die Verformung des Verformungselements der zweite Messkörper (5) über einen Weg (h) bewegt wird, der proportional zu der Kraft ist.

14. Vorrichtung nach einem der Ansprüche 12 und 13, wobei das Verformungselement (9) ein elastisches Element ist, insbesondere eine Feder.

15. Vorrichtung nach einem der Ansprüche 12 bis 14, wobei
das erste Spulensystem (1, 3a, 6) einen ersten Spulenkörper (3a) und eine um den ersten Spulenkörper (3a) gewickelte Spule (1) umfasst, wobei der erste Messkörper (6) aus einem Metall hergestellt ist und als beweglicher Spulenkern in dem ersten Spulensystem fungiert, und
das zweite Spulensystem (2, 3b, 5) einen zweiten Spulenkörper (3b) und eine um den zweiten Spulenkörper (3b) gewickelte Spule (2) umfasst, wobei der zweite Messkörper (5) aus einem Metall hergestellt ist und als beweglicher Spulenkern in dem zweiten Spulensystem fungiert.

16. Vorrichtung nach Anspruch 15, wobei
der erste Spulenkörper (3a) und der zweite Spulenkörper (3b) einstückig ausgebildet sind.

17. Vorrichtung nach einem der Ansprüche 15 oder 16, wobei der erste Spulenkörper (3a) einen kleineren Durchmesser als der zweite Spulenkörper (3b) aufweist.

18. Vorrichtung nach einem der Ansprüche 15 oder 16, wobei der Durchmesser des ersten Spulenkörpers (3a) gleich dem Durchmesser des zweiten Spulenkörpers (3b) ist.

19. Vorrichtung nach einem der Ansprüche 12 bis 18, wobei die Erfassungseinrichtung (30) eine elektrische Schaltung umfasst, die geänderte elektrische Eigenschaften der ersten und zweiten Spulensysteme als veränderlichen Parameter verwendet, wobei ein Ausgangssignal (PFF) der elektrischen Schaltung durch den veränderlichen Parameter beeinflusst wird, und
die Erfassungseinrichtung (30) eingerichtet ist, das Ausgangssignal zur Messung der Position und der Kraft bei der linearen Betätigungsvorrichtung (20) auszuwerten.

20. Vorrichtung nach Anspruch 19, wobei die elektrische Schaltung (30) zumindest eine elektrische Oszillatorschaltung umfasst, wobei die elektrischen Eigenschaften Induktivitäten der ersten und zweiten Spulensystem sind und das Ausgangssignal (PFF) ein Frequenzsignal ist.

21. Vorrichtung nach einem der Ansprüche 19 und 20, wobei die Erfassungseinrichtung (30) eingerichtet ist, die geänderten elektrischen Eigenschaften der ersten und zweiten Spulensysteme intermittierend zu verwenden, um das Ausgangssignal (PFF) zu beeinflussen, so dass eine Messung der Kraft und eine Messung der Position abwechselnd in vorbestimmten Intervallen ausgeführt werden.

22. Vorrichtung nach einem der Ansprüche 12 bis 21, wobei die lineare Betätigungsvorrichtung (20) ein Linearantrieb zur Betätigung eines Ventils zur Begrenzung, Regelung und/oder Verteilung von Gasen oder Flüssigkeiten ist.

23. Lineare Betätigungsvorrichtung (20), umfassend:
ein lineares Verschiebungselement (6), das eingerichtet ist, eine lineare Bewegung auszuführen,
ein Antriebselement (7), das eingerichtet ist, das lineare Verschiebungselement (6) anzutreiben, und
eine Vorrichtung zur Messung einer Kraft und einer Position bei der linearen Betätigungsvorrichtung (20) nach einem der Ansprüche 12 bis 22.

## Claims

1. Method for measurement of a force and of a position for a linear operating apparatus (20), having steps for
detection of a change in an electrical characteristic of a first coil system (1, 3a, 6) for measurement of a position of the linear operating apparatus (20), wherein the change in the electrical characteristic is caused by a movement of a first measurement body (6) in the first coil system (1, 3a, 6),
detection of a change in an electrical characteristic of a second coil system (2, 3b, 5) for measurement of a force which acts on the linear operating apparatus (20)
wherein the change in the electrical characteristic is caused by a movement of a second measurement body (5) in the second coil system (2, 3b, 5)
wherein the movement of the first measurement body (6) is produced by a position change of a linear movement element of the linear operating apparatus (20), and the movement of the second measurement body (5) is produced by a force/distance conversion via a deformation element (9).

2. Method according to Claim 1, wherein the movement of the second measurement body (5) is produced in that the force acting on the linear operating apparatus (20) deforms the deformation element (9) and the second measurement body (5) which is connected to the deformation element (9), is moved by the deformation over a distance (h) which is proportional to the force.

3. Method according to one of Claims 1 and 2, wherein the deformation element (9) is an elastic element, in particular a spring.

4. Method according to one of the preceding claims,
wherein
the first coil system (1, 3a, 6) comprises a first coil former (3a) and a coil (1) which is wound around the first coil former (3a), and the first measurement body (6), which is produced from a metal, acts as a moving coil core in the first coil system (1, 3a, 6) and
the second coil system (2, 3b, 5) comprises a second coil former (3b) and a coil (2) which is wound around the second coil former (3b), and the second measurement body (5), which is produced from a metal, acts as a moving coil core in the second coil system (2, 3b, 5).

5. Method according to Claim 4, wherein
the first coil former (3a) and the second coil former (3b) are formed integrally.

6. Method according to one of Claims 4 or 5, wherein the first coil former (3a) has a smaller diameter than the second coil former (3b).

7. Method according to one of Claims 4 or 5, wherein the diameter of the first coil former (3a) is equal to the diameter of the second coil former (3b).

8. Method according to one of the preceding claims, having steps for
use of the changed electrical characteristics of the first and second coil systems as variable parameters in an electrical circuit (30),
detection of an output signal (PFF) from the electrical circuit, which output signal (PFF) is influenced by the variable parameter, and
evaluation of the output signal (PFF) in order to measure the position and the force for the linear operating apparatus (20).

9. Method according to Claim 8, wherein the electrical circuit (30) comprises at least one electrical oscillator circuit, wherein the electrical characteristics are inductances of the first and the second coil systems, and the output signal (PFF) is a frequency signal.

10. Method according to one of Claims 8 and 9, wherein the changed electrical characteristics of the first and second coil systems are used intermittently in order to influence the output signal (PFF), such that a force measurement and a position measurement are carried out alternately at predetermined intervals.

11. Method according to one of the preceding claims, wherein the linear operating apparatus (20) is a linear drive for operation of a valve for limiting, closed-loop control and/or distribution of gases or liquids.

12. Apparatus for measurement of a force and of a position for a linear operating apparatus (20), comprising
a linear movement element (6),
a first coil system (1, 3a, 6) having a first moving measurement body (6),
a second coil system (2, 3b, 5) having a second moving measurement body (5),
a deformation element (9) which is connected to the second measurement body (5), and
a detection device (30) for detection of a change in an electrical characteristic of the first coil system (1, 3a, 6) in order to measure a position of the linear operating apparatus, and of a change in an electrical characteristic of the second coil system (2, 3b, 5) in order to measure a force which acts on the linear operating apparatus (20),
wherein the change in the electrical characteristic of the first coil system (1, 3a, 6) is caused by a movement of the first measurement body (6) in the first coil system, and the change in the electrical characteristic of the second coil system (2, 3b, 5) is caused by a movement of the second measurement body (5) in the second coil system,
wherein the movement of the first measurement body (6) is produced by a position change of the linear movement element (6) of the linear operating apparatus (20), and the movement of the second measurement body (5) is produced by a force/distance conversion via the deformation element (9).

13. Apparatus according to Claim 12, wherein the deformation element (9) is designed to be deformed by the force acting on the linear operating apparatus (20), wherein the deformation of the deformation element moves the second measurement body (5) over a distance (h) which is proportional to the force.

14. Apparatus according to one of Claims 12 and 13, wherein the deformation element (9) is an elastic element, in particular a spring.

15. Apparatus according to one of Claims 12 to 14, wherein
the first coil system (1, 3a, 6) comprises a first coil former (3a) and a coil (1) which is wound around the first coil former (3a), wherein the first measurement body (6) is produced from a metal and acts as a moving coil core in the first coil system, and
the second coil system (2, 3b, 5) comprises a second coil former (3b) and a coil (2) which is wound around the second coil former (3b), wherein the second measurement body (5) is produced from a metal and acts as a moving coil core in the second coil system.

16. Apparatus according to Claim 15, wherein
the first coil former (3a) and the second coil former (3b) are formed integrally.

17. Apparatus according to one of Claims 15 or 16, wherein the first coil former (3a) has a smaller diameter than the second coil former (3b).

18. Apparatus according to one of Claims 15 or 16, wherein the diameter of the first coil former (3a) is equal to the diameter of the second coil former (3b).

19. Apparatus according to one of Claims 12 to 18, wherein the detection device (30) comprises an electrical circuit which uses changed electrical characteristics of the first and second coil systems as a variable parameter, wherein an output signal (PFF) from the electrical circuit is influenced by the variable parameter, and
the detection device (30) is designed to evaluate the output signal in order to measure the position and the force for the linear operating apparatus (20).

20. Apparatus according to Claim 19, wherein the electrical circuit (30) comprises at least one electrical oscillator circuit, wherein the electrical characteristics are inductances of the first and the second coil systems and the output signal (PFF) is a frequency signal.

21. Apparatus according to one of Claims 19 and 20, wherein the detection device (30) is designed to use the changed electrical characteristics of the first and second coil systems intermittently in order to influence the output signal (PFF) such that a force measurement and a position measurement are carried out alternately at predetermined intervals.

22. Apparatus according to one of Claims 12 to 21,
wherein the linear operating apparatus (20) is a linear drive for operating a valve for limiting, closed-loop control and/or distribution of gases or liquids.

23. Linear operating apparatus (20), comprising:
a linear movement element (6) which is designed to carry out a linear movement,
a drive element (7) which is designed to drive the linear movement element (6) and
an apparatus for measurement of a force and of a position for the linear operating apparatus (20) according to one of Claims 12 to 22.

## Revendications

1. Procédé de mesure d'une force et d'une position dans un dispositif d'actionnement linéaire (20), comportant les étapes consistant à:
détecter une variation d'une propriété électrique d'un premier système de bobine (1,3a,6) pour mesurer une position du dispositif d'actionnement linéaire (20), dans lequel la variation de la propriété électrique est provoquée par un mouvement d'un premier corps de mesure (6) dans le premier système de bobine (1,3a,6),
détecter une variation d'une propriété électrique d'un deuxième système de bobine (2,3b,5) pour mesurer une force, qui agit dans le dispositif d'actionnement linéaire (20), dans lequel la variation de la propriété électrique est provoquée par un mouvement d'un deuxième corps de mesure (5) dans le deuxième système de bobines (2,3b,5),
dans lequel le mouvement du premier corps de mesure (6) est généré par une variation de position d'un élément de déplacement linéaire du dispositif d'actionnement linéaire (20) et le mouvement du deuxième corps de mesure (5) est généré par une conversion du parcours de la force par l'intermédiaire d'un élément de déformation (9).

2. Procédé selon la revendication 1, dans lequel le mouvement du deuxième corps de mesure (5) est généré en ce que l'élément de déformation (9) est déformé par la force agissant sur le dispositif d'actionnement linéaire (20) et le deuxième corps de mesure (5), qui est relié à l'élément de déformation (9), est déplacé par la déformation sur un trajet (h), qui est proportionnel à la force.

3. Procédé selon une des revendications 1 et 2, dans lequel l'élément de déformation (9) est un élément élastique, notamment un ressort.

4. Procédé selon une des revendications précédentes, dans lequel
le premier système de bobine (1,3a,6) comprend un premier corps de bobine (3a) et une bobine (1) enroulée autour du premier corps de bobine (3a) et le premier corps de mesure (6), qui est produit à partir d'un métal, fonctionne comme un noyau de bobine mobile dans le premier système de bobine (1,3a,6), et
le deuxième système de bobine (2,3b,5) comprend un deuxième corps de bobine (3b) et une bobine (2) enroulée autour du deuxième corps de bobine (3b) et le deuxième corps de mesure (5), qui est produit à partir d'un métal, fonctionne comme un noyau de bobine mobile dans le deuxième système de bobine (2,3b,5).

5. Procédé selon la revendication 4, dans lequel
le premier corps de bobine (3a) et le deuxième corps de bobine (3b) sont réalisés en un seul tenant.

6. Procédé selon une des revendications 4 ou 5, dans lequel le premier corps de bobine (3a) présente un diamètre plus petit que le deuxième corps de bobine (3b).

7. Procédé selon une des revendications 4 ou 5, dans lequel le diamètre du premier corps de bobine (3a) est identique au diamètre du deuxième corps de bobine (3b).

8. Procédé selon une des revendications précédentes, comportant les étapes consistant à :
employer les propriétés électriques modifiées du premier et du deuxième système de bobine comme paramètres variables dans un circuit électrique (30),
détecter un signal de sortie (PFF) du circuit électrique, qui est influencé par le paramètre variable, et
estimer le signal de sortie (PFF) pour mesurer la position et la force dans le dispositif d'actionnement linéaire (20).

9. Procédé selon la revendication 8, dans lequel le circuit électrique (30) comprend au moins un circuit oscillant électrique, dans lequel les propriétés électriques sont des inductances du premier et du deuxième système de bobine et le signal de sortie (PFF) est un signal de fréquence.

10. Procédé selon une des revendications 8 et 9, dans lequel les propriétés électriques modifiées du premier et du deuxième système de bobine sont employées de manière intermittente, afin d'influencer le signal de sortie (PFF), de sorte qu'une mesure de la force et une mesure de la position soient effectuées en alternance à des intervalles prédéterminés.

11. Procédé selon une des revendications précédentes, dans lequel le dispositif d'actionnement linéaire (20) est un dispositif d'entraînement linéaire pour actionner une soupape de limitation, réglage et/ou distribution de gaz ou de liquides.

12. Dispositif de mesure d'une force et d'une position dans un dispositif d'actionnement linéaire (20), comprenant :
un élément de déplacement linéaire (6),
un premier système de bobine (1,3a,6) avec un premier corps de mesure mobile (6),
un deuxième système de bobine (2,3b,5) avec un deuxième corps de mesure mobile (5),
un élément de déformation (9), qui est relié au deuxième corps de mesure (5), et
un dispositif de détection (30) pour détecter une variation d'une propriété électrique du premier système de bobine (1,3a,6) pour mesurer une position du dispositif d'actionnement linéaire et d'une propriété électrique du deuxième système de bobine (2,3b,5) pour mesurer une force, qui agit sur le dispositif d'actionnement linéaire (20),
dans lequel la variation de la propriété électrique du premier système de bobine (1,3a,6) est provoquée par un mouvement du premier corps de mesure (6) dans le premier système de bobine et la variation de la propriété électrique du deuxième système de bobine (2,3b,5) est provoquée par un mouvement du deuxième corps de mesure (5) dans le deuxième système de bobine,
dans lequel le mouvement du premier corps de mesure (6) est généré par une variation de position de l'élément de déplacement linéaire (6) du dispositif d'actionnement linéaire (20) et le mouvement du deuxième corps de mesure (5) est généré par une conversion du parcours de la force par l'intermédiaire de l'élément de déformation (9).

13. Dispositif selon la revendication 12, dans lequel l'élément de déformation (9) est conçu afin d'être déformé par la force agissant sur le dispositif d'actionnement linéaire (20), dans lequel le deuxième corps de mesure (5) est déplacé sur un trajet (h), qui est proportionnel à la force, par la déformation de l'élément de déformation.

14. Dispositif selon une des revendications 12 et 13, dans lequel l'élément de déformation (9) est un élément élastique, notamment un ressort.

15. Dispositif selon une des revendications 12 à 14, dans lequel
le premier système de bobine (1,3a,6) comprend un premier corps de bobine (3a) et une bobine (1) enroulée autour du premier corps de bobine (3a),
dans lequel le premier corps de mesure (6) est produit à partir d'un métal et fonctionne comme un noyau de bobine mobile dans le premier système de bobine, et
le deuxième système de bobine (2,3b,5) comprend un deuxième corps de bobine (3b) et une bobine (2) enroulée autour du deuxième corps de bobine (3b),
dans lequel le deuxième corps de mesure (5) est produit à partir d'un métal et fonctionne comme un noyau de bobine mobile dans le deuxième système de bobine.

16. Dispositif selon la revendication 15, dans lequel le premier corps de bobine (3a) et le deuxième corps de bobine (3b) sont réalisés en un seul tenant.

17. Dispositif selon une des revendications 15 ou 16, dans lequel le premier corps de bobine (3a) présente un diamètre plus petit que le deuxième corps de bobine (3b).

18. Dispositif selon une des revendications 15 ou 16, dans lequel le diamètre du premier corps de bobine (3a) est identique au diamètre du deuxième corps de bobine (3b).

19. Dispositif selon une des revendications 12 à 18, dans lequel le dispositif de détection (30) comprend un circuit électrique, qui emploie des propriétés électriques modifiées du premier et du deuxième système de bobine comme paramètres variables, dans lequel un signal de sortie (PFF) du circuit électrique est influencé par le paramètre variable, et
le dispositif de détection (30) est conçu afin d'estimer le signal de sortie pour mesurer la position et la force dans le dispositif d'actionnement linéaire (20).

20. Dispositif selon la revendication 19, dans lequel le circuit électrique (30) comprend au moins un circuit oscillant électrique, dans lequel les propriétés électriques sont des inductances du premier et du deuxième système de bobine et le signal de sortie (PFF) est un signal de fréquence.

21. Dispositif selon une des revendications 19 et 20, dans lequel le dispositif de détection (30) est conçu afin d'employer de manière intermittente les propriétés électriques modifiées du premier et du deuxième système de bobine, afin d'influencer le signal de sortie (PFF), de sorte qu'une mesure de la force et une mesure de la position soient effectuées en alternance à des intervalles prédéterminés.

22. Dispositif selon une des revendications 12 à 21, dans lequel le dispositif d'actionnement linéaire (20) est un dispositif d'entraînement linéaire pour actionner une soupape de limitation, réglage et/ou distribution de gaz ou de liquides.

23. Dispositif d'actionnement linéaire (20), comprenant :
un élément de déplacement linéaire (6), qui est conçu afin d'exécuter un mouvement linéaire,
un élément d'entraînement (7), qui est conçu afin d'entraîner l'élément de déplacement linéaire (6), et
un dispositif de mesure d'une force et d'une position dans le dispositif d'actionnement linéaire (20) selon une des revendications 12 à 22.
